(19) Europäisches Patentamt
European Patent Office
Office européen des brevets

(11) EP 2 582 245 B1

(12) EUROPEAN PATENT SPECIFICATION

(45) Date of publication and mention
of the grant of the patent:
26.08.2015 Bulletin 2015/35

(51) Int Cl.:
A01N 43/90 (2006.01)          A01N 43/40 (2006.01)
A01P 13/00 (2006.01)

(21) Application number: 11728977.7

(22) Date of filing: 16.06.2011

(86) International application number:
PCT/US2011/040682

(87) International publication number:
WO 2011/159884 (22.12.2011 Gazette 2011/51)

(54) **SYNERGISTIC HERBICIDAL COMPOSITION CONTAINING CLOPYRALID AND FLORASULAM**

SYNERGISTISCHE HERBICIDE ZUBEREITUNG ENTHALTEND CLOPYRALID UND FLORASULAM

COMPOSITION HERBICIDE SYNERGIQUE CONTENANT DU CLOPYRALIDE ET DU FLORASULAME

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 17.06.2010 US 355739 P

(43) Date of publication of application:
24.04.2013 Bulletin 2013/17

(73) Proprietor: Dow AgroSciences LLC
Indianapolis, IN 46268 (US)

(72) Inventor: BECKER, Joerg
D-83043 Bad Aibling (DE)

(74) Representative: f & e patent
Fleischer, Engels & Partner mbB, Patentanwälte
Braunsberger Feld 29
51429 Bergisch Gladbach (DE)

(56) References cited:
WO-A2-2006/086640     US-A1- 2009 215 797

• TOMLIN (ED) C D S: "Clopyralid", E-PESTICIDE MANUAL, XX, XX, no. version 4, 1 July 2006 (2006-07-01), pages 1-3, XP002453877,
• WELLS G S: "Florasulam + clopyralid for broad spectrum broadleaf weed control in winter cereals in southern Australia", PROCEEDINGS OF THE AUSTRALIAN WEEDS CONFERENCE, XX, XX, 1 January 2008 (2008-01-01), pages 333-335, XP003029652,
• NEWMAN P: "Herbicide options for resistant wild radish in wheat", AGRIBUSINESS CROP UPDATES,, 1 September 2008 (2008-09-01), pages 15-17, XP003029653,
• "DOW AGROSCIENCES", LEAFLET OF DOW AGROSCIENCES, DOW AGROSCIENCES, US, 1 January 2009 (2009-01-01), pages 1-10, XP003029654,

## Description

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

In some cases, herbicidal active ingredients have been shown to be more effective in combination than when applied individually and this is referred to as "synergism." As described in the Herbicide Handbook of the Weed Science Society of America, Ninth Edition, 2007, p. 429, "'synergism' [is] an interaction of two or more factors such that the effect when combined is greater than the predicted effect based on the response to each factor applied separately." The present invention is based on the discovery that clopyralid and florasulam, already known individually for their herbicidal efficacy, display a synergistic effect when applied in combination.

The present invention concerns a synergistic herbicidal mixture consisting of an herbicidally effective amount of (a) clopyralid and (b) florasulam according to claim 1. The compositions may also contain an agriculturally acceptable adjuvant or carrier.

The present invention also concerns a method of controlling the growth of undesirable vegetation according to claim 3, particularly in cereal crops (wheat, barley, rye and oats).

Clopyralid is the common name for 3,6-dichloropyridine-2-carboxylic acid. Its herbicidal activity is described in The Pesticide Manual, Fourteenth Edition, 2006. Clopyralid controls annual and perennial broad-leaved weeds of the families *Polygonaceae, Compositae, Leguminosae* and *Umbelliferae* in sugar beet, fodder beet, oilseed rape, maize, cereals, brassicas, onions, leeks, strawberries and flax and in grassland and non-crop land. Clopyralid controls particularly well the following: creeping thistle and perennial sow-thistle, coltsfoot, mayweeds and *Polygonum spp.*

Florasulam is the common name for 2',6',8-trifluoro-5-methoxy[1,2,4]triazolo[1,5-c]-pyrimidine-2-sulfonanilide. Its herbicidal activity is described in The Pesticide Manual, Fourteenth Edition, 2006. Florasulam controls broad-leaved weeds, especially *Galium apaine, Stellaria media, Polygonum convolvulus, Marticaria* spp. and various cruciferae in cereals and maize.

Formulations comprising both clopyralid and florasulam have been described in US 2009/0215797 A1 and G. S. Wells, Proceedings of the 16th Australian Weeds Conference, R. D. van Klinken, V. A. Osten, F. D. Panetta and J. C. Scanlan (Eds.), Queensland Weed Society: Brisbane, 2008, 333-335. In addition, such formulations are commercially available as Torpedo™ from Dow AgroSciences (Indianapolis, IN, USA). However, a synergistic effect of mixtures comprising clopyralid and florasulam according to claim 1 had not been described previously.

The term herbicide is used herein to mean an active ingredient that kills, controls or otherwise adversely modifies the growth of plants. An herbicidally effective or vegetation controlling amount is an amount of active ingredient which causes an adversely modifying effect and includes deviations from natural development, killing, regulation, desiccation, retardation, and the like. The terms plants and vegetation include germinant seeds, emerging seedlings and established vegetation.

Herbicidal activity is exhibited by the compounds of the synergistic mixture when they are applied directly to the plant or to the locus of the plant at any stage of growth or before planting or emergence. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote non-selective or selective herbicidal action. Generally, it is preferred to apply the composition of the present invention postemergence to relatively immature undesirable vegetation to achieve the maximum control of weeds.

In the composition of this invention, the weight ratio of clopyralid (acid equivalents) to florasulam (active ingredient) at which the herbicidal effect is synergistic is 12:1.

The rate at which the synergistic composition is applied will depend upon the particular type of weed to be controlled, the degree of control required, and the timing and method of application. In general the composition of the invention can be applied as a mixture where florasulam (active ingredient) is applied at a rate of 2.5 g ai/ha, if clopyralid (acid equivalents) is applied at a rate of 30 g ae/ha or at a rate of 3.75 g ai/ha, if clopyralid is applied at a rate of 45 g ae/ha or at a rate of 5 g ai/ha, if clopyralid is applied at a rate of 60 g ae/ha.

The components of the synergistic mixture of the present invention can be applied either separately or as part of a multipart herbicidal system.

The synergistic mixture of the present invention can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the synergistic composition of the present invention include: 2,4-D Esters & Amines, 2,4-MCPA, amidosulfuron, beflubutamid, benazolin, bentazone, bifenox, bromoxynil, butachlor, butafenacil, carfentrazone-ethyl, chlormequat, chlortoluron, cinidon-ethyl, clodinafop-propargyl, cyanazine, cyclosulfamuron, dicamba, diclofop-methyl, diflufenican, diflufenzopyr, dimefuron, diuron, ethoxysulfuron, fenoxaprop, fenoxaprop-ethyl, fenoxaprop-ethyl + isoxidifen-ethyl, fenoxaprop-p-ethyl, flucarbazone, flucetosulfuron, flufenacet, flumetsulam, flupyrsulfuron, flurtamone, imazamethabenz, imazamox, imazapic, imazapyr, imazaquin, imazethapyr, imazosulfuron, indanofan, iodosulfuron, iodosulfuron-ethyl-sodium, ioxynil, isoproturon, isoxaben, KIH-845, lactofen, linuron, MCPA, mecoprop-P, mesosulfuron, mesosulfuron-ethyl sodium, metosulam, metribuzin, metsulfuron, metsulfuron-methyl, orthosulfamuron, oxyfluorfen, pendimethalin, penoxsulam, picolinafen, pinoxaden, primisulfuron, profluazol, propoxycarbazone, prosulfocarb, prosulfuron, pyraflufen ethyl, pyribenzoxim, pyroxsulam, quinmerac, sulfosulfuron, thifensulfuron, thifensulfuron-methyl, topramezone, tralkoxydim, triasulfuron, tribenuron and tribenuron-methyl.

The synergistic mixture of the present invention can be used on acetolactate synthase inhibitor tolerant crops. The synergistic composition of the present invention can, further, be used in conjunction with 2,4-D, glyphosate, glufosinate, dicamba or imidazolinones on 2,4-D tolerant, glyphosate-tolerant, glufosinate-tolerant, dicamba-tolerant or imidazolinone-tolerant crops.

It is generally preferred to use the synergistic composition of the present invention in combination with herbicides that are selective for the crop being treated and which complement the spectrum of weeds controlled by these compounds at the application rate employed. It is further generally preferred to apply the synergistic composition of the present invention and other complementary herbicides at the same time, either as a combination formulation or as a tank mix.

The synergistic composition of the present invention can generally be employed in combination with known herbicide safeners, such as benoxacor, benthiocarb, brassinolide, cloquintocet (mexyl), cyometrinil, cyprosulfamate, daimuron, dichlormid, dicyclonon, dietholate, dimepiperate, disulfoton, fenchlorazole-ethyl, fenclorim, flurazole, fluxofenim, furilazole, harpin proteins, isoxadifen-ethyl, mefenpyr-diethyl, mephanate, MG 191, MON 4660, naphthalic anhydride (NA), oxabetrinil, R29148 and *N*-phenyl-sulfonylbenzoic acid amides, to enhance their selectivity.

In practice, it is preferable to use the synergistic composition of the present invention in mixtures containing an herbicidally effective amount of the herbicidal components along with at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water dispersible granules, or wettable powders, or liquids, such as, for example, emulsifiable concentrates, solutions, emulsions or suspensions.

Suitable agricultural adjuvants and carriers that are useful in preparing the herbicidal mixtures of the invention are well known to those skilled in the art. Some of these adjuvants include, but are not limited to, crop oil concentrate (mineral oil (85%) + emulsifiers (15%)); nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents typically used include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cotton seed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, *n*-butyl oleate, isopropyl myristate, propylene glycol dioleate, di-octyl succinate, di-butyl adipate, di-octyl phthalate and the like; esters of mono, di and polycarboxylic acids and the like. Specific organic solvents include toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, N-methyl-2-pyrrolidinone, *N,N*-dimethyl alkylamides, dimethyl sulfoxide, liquid fertilizers and the like. Water is generally the carrier of choice for the dilution of concentrates.

Suitable solid carriers include talc, pyrophyllite clay, silica, attapulgus clay, kaolin clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, and the like.

It is usually desirable to incorporate one or more surface-active agents into the compositions of the present invention. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Surfactants conventionally used in the art of formulation and which may also be used in the present formulations are described, *inter alia,* in "McCutcheon's Detergents and Emulsifiers Annual," MC Publishing Corp., Ridgewood, New Jersey, 1998 and in "Encyclopedia of Surfactants," Vol. I-III, Chemical Publishing Co., New York, 1980-81. Typical surface-active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono- and dialkyl phosphate esters; vegetable oils such as soybean oil, rapeseed oil, olive oil, castor oil, sunflower seed oil, coconut oil, corn oil, cotton seed oil, linseed oil, palm oil, peanut oil, safflower oil, sesame oil, tung oil and the like; and esters of the above vegetable oils.

Other adjuvants commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

The concentration of the active ingredients in the synergistic composition of the present invention is generally from 0.001 to 98 percent by weight. Concentrations from 0.01 to 90 percent by weight are often employed. In compositions designed to be employed as concentrates, the active ingredients are generally present in a concentration from 5 to 98 weight percent, preferably 10 to 90 weight percent. Such compositions are typically diluted with an inert carrier, such as water, before application. The diluted compositions usually applied to weeds or the locus of weeds generally contain 0.0001 to 1 weight percent active ingredient and preferably contain 0.001 to 0.05 weight percent.

The present compositions can be applied to weeds or their locus by the use of conventional ground or aerial dusters, sprayers, and granule applicators, by addition to irrigation water, and by other conventional means known to those skilled in the art.

The following examples illustrate the present invention.

Examples

Evaluation of Postemergence Herbicidal Activity of Mixtures under Field Conditions

Methodology

These trials were conducted under field conditions in Germany. Trial sites were located in commercially grown winter barley and winter rye. The crops were grown using normal cultural practices for fertilization, seeding, and maintenance to ensure good growth of the crop and the weeds. The trials were conducted using normal research methodology. Trial plots were between 2.5 to 3 meters (m) wide by 6 to 10 m long. All treatments were applied using a randomized complete block trial design with 3 replications per treatment. The trial sites had naturally occurring populations of weeds. The weed spectrum included, but was not limited to, scentless mayweed (*Matricaria inodora,* MATIN), field forget-me-not (*Myosotis arvensis*, MYOAR), and Bachelor's button (*Centaurea cyanus,* CENCY).

Treatments consisted of formulated products applied in water. The application volumes were 200 liter per hectare (L/ha). All application were made using precision bicycle sprayers using a 3 m boom using flat fan (80° or 110°) nozzles to broadcast the treatments on the testing plots.

Evaluation

The treated plots and control plots were rated blind at various intervals after application. Ratings were based of Percent (%) Visual weed control, where 0 corresponds to no injury and 100 corresponds to complete kill.

Data was collected for all trials and analyzed using various statistical methods.

Colby's equation was used to determine the herbicidal effects expected from the mixtures (Colby, S. R. Calculation of the synergistic and antagonistic response of herbicide combinations. Weeds 1967 15, 20-22).

The following equation was used to calculate the expected activity of mixtures containing two active ingredients, A and B:

$$\text{Expected} = A + B - (A \times B/100)$$

A = observed efficacy of active ingredient A at the same concentration as used in the mixture;
B = observed efficacy of active ingredient B at the same concentration as used in the mixture.

The results are summarized in Table 1.

**Table 1.** Synergistic weed control following an application of florasulam + clopyralid 45 to 92 days after application - Field trial #1

| Florasulam | Clopyralid | Weeds | | | | | |
|---|---|---|---|---|---|---|---|
| g ai/ha | g ae/ha | CENCY | | MATIN | | MYOAR | |
| Rate | | Obs | Expected* | Obs | Expected* | Obs | Expected* |
| 2.5 | 0 | 20 | - | 60 | - | 50 | - |
| 3.75 | 0 | 40 | - | 67 | - | 50 | - |
| 5 | 0 | 70 | - | 53 | - | 67 | - |
| 0 | 30 | 37 | - | 0 | - | 0 | - |
| 0 | 45 | 57 | - | 50 | - | 0 | - |
| 0 | 60 | 73 | - | 58 | - | 0 | - |
| 2.5 | 30 | 83 | 49.6 | 67 | 60 | 70 | 50 |
| 3.75 | 45 | 92 | 74.2 | 93 | 83.5 | 73 | 50 |
| 5 | 60 | 93 | 91.9 | 99 | 80.26 | 93 | 67 |

CENCY - Bachelor's button (*Centaurea cyanus*)
MATIN - Scentless mayweed (*Matricaria inodora*)
MYOAR - Field forget-me-not (*Myosotis arvensis*)
Obs - Percent control observed
Expected* - Percent control expected by Colby equation

**Claims**

1. A synergistic herbicidal mixture consisting of an herbicidally effective amount of (a) clopyralid and (b) florasulam as a formulation in water, in which the weight ratio of clopyralid (acid equivalents) to florasulam (active ingredient) is 12:1.

2. An herbicidal composition comprising an herbicidally effective amount of the synergistic herbicidal mixture of Claim 1 and an agriculturally acceptable adjuvant or carrier.

3. A method of controlling undesirable vegetation which comprises contacting the vegetation or the locus thereof with an herbicidally effective amount the synergistic herbicidal mixture of Claim 1, wherein florasulam (active ingredient) is applied at a rate of 2.5 g ai/ha, if clopyralid (acid equivalents) is applied at a rate of 30 g ae/ha or at a rate of 3.75 g ai/ha, if clopyralid is applied at a rate of 45 g ae/ha or at a rate of 5 g ai/ha, if clopyralid is applied at a rate of 60 g ae/ha and wherein the undesirable vegetation is Bachelor's button (*Centaurea cyanus*), scentless mayweed (*Matricaria inodora)* or field forget-me-not *(Myosotis arvensis*).

**Patentansprüche**

1. Eine synergistische herbizide Mischung bestehend aus einer herbizid wirksamen Menge von (a) Clopyralid und (b) Florasulam als Formulierung in Wasser, in welcher das Gewichtsverhältnis von Clopyralid (Säureäquivalente) zu Florasulam (aktiver Inhaltsstoff) 12:1 ist.

2. Eine herbizide Zusammensetzung umfassend eine herbizid wirksame Menge der synergistischen herbiziden Mischung gemäß Anspruch 1 und einen landwirtschaftlich akzeptablen Hilfs- oder Trägerstoff.

3. Ein Verfahren zur Bekämpfung unerwünschter Vegetation, welches das In-Kontakt-Bringen der Vegetation oder des Ortes derselben mit einer herbizid wirksamen Menge der synergistischen herbiziden Mischung gemäß Anspruch 1 umfasst, wobei Florasulam (aktiver Inhaltsstoff) in einer Menge von 2,5 g ai/ha angewandt wird, wenn Clopyralid (Säureäquivalente) in einer Menge von 30 g ae/ha angewandt wird, oder in einer Menge von 3,75 g ai/ha, wenn Clopyralid in einer Menge von 45 g ae/ha angewandt wird, oder in einer Menge von 5 g ai/ha, wenn Clopyralid in einer Menge von 60 g ae/ha angewandt wird und wobei die unerwünschte Vegetation Kornblume (*Centaurea cyanus*), Geruchlose Kamille (*Matricaria inodora*) oder Acker-Vergissmeinnicht (*Myosotis arvensis*) ist.

**Revendications**

1. Mélange herbicide synergique consistant en une quantité efficace en tant qu'herbicide de (a) clopyralide et (b) florasulame sous forme d'une formulation dans de l'eau, dans lequel le rapport pondéral du clopyralide (équivalents d'acide) au florasulame (ingrédient actif) est de 12:1.

2. Composition herbicide comprenant une quantité efficace en tant qu'herbicide du mélange herbicide synergique selon la revendication 1 et un adjuvant ou support acceptable en agriculture.

3. Procédé de lutte contre une végétation indésirable, qui comprend la mise en contact de la végétation ou de son habitat avec une quantité à efficacité herbicide du mélange herbicide synergique selon la revendication 1, le florasulame (ingrédient actif) étant appliqué à une dose de 2,5 g ia/ha si le clopyralide (équivalents d'acide) est appliqué à une dose de 30 g éa/ha, ou à une dose de 3,75 g ia/ha si le clopyralide est appliqué à une dose de 45 g éa/ha, ou à une dose de 5 g ia/ha si le clopyralide est appliqué à une dose de 60 g éa/ha et la végétation indésirable étant le bleuet (*Centaurea cyanus*), la matricaire inodore (*Matricaria inodora*) ou le myosotis des champs (*Myosotis arvensis*).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090215797 A1

**Non-patent literature cited in the description**

- Herbicide Handbook. Weed Science Society of America, 429
- The Pesticide Manual. 2006
- The Pesticide Manual
- **G. S. WELLS.** Proceedings of the 16th Australian Weeds Conference. Queensland Weed Society, 2008, 333-335
- **MCCUTCHEON'S.** Detergents and Emulsifiers Annual. MC Publishing Corp, 1998
- Encyclopedia of Surfactants. Chemical Publishing Co, 1980, vol. I-III
- **COLBY, S. R.** Calculation of the synergistic and antagonistic response of herbicide combinations. *Weeds,* 1967, vol. 15, 20-22